# EUROPEAN PATENT APPLICATION

(11) **EP 4 793 241 A1**
(43) Date of publication of application: **19.08.2026**
(21) Application number: 25382124.3
(22) Date of filing: 13.02.2025
(51) Int. Cl.: C02F 1/46, A47J 31/60, A47L 15/00, A47L 15/42, C02F 5/08, D06F 39/00, C02F 1/00, C02F 1/66

(54) **METHOD FOR DESCALING A DETECTION DEVICE OF A HOUSEHOLD APPLIANCE AND HOUSEHOLD APPLIANCE**

(71) Applicant: BSH Hausgeräte GmbH, 81739 München (DE); BSH Electrodomésticos España, S.A., 50016 Zaragoza (ES)
(72) Inventor: Perez Nicolas, Maria, 50007 Zaragoza (ES); Garcia Romeo, Daniel, 50013 Zaragoza (ES); Rojo Esteban, Lander, 50009 Zaragoza (ES); Bosque Santos, Maria, 50018 Zaragoza (ES); Garicano Estremera, Saul, 50015 Zaragoza (ES)

(57) **Abstract**

The invention relates to a method for descaling a detection device (2) of a household appliance (1), which comprises at least one component (3a, 3b, 3c), which is supplied with water during operation of the household appliance (1), wherein the detection device (2) comprises working electrodes (7a, 7b) which are arranged in a fluid path (4) of the water and are configured to detect a presence of limescale on at least one surface of the at least one component (3a, 3b, 3c). At least the steps a) bringing the working electrodes (7a, 7b) into contact with a descaling medium, b) applying a voltage to the working electrodes (7a, 7b) for a fixed time period, c) optionally waiting for a predetermined rest period, and d) applying a range of potentials to the working electrodes (7a, 7b) are performed. The invention further relates to a household appliance (1) comprising a descaling device configured to perform this method.

## Description

The invention relates to a method for descaling a detection device of a household appliance a household appliance with at least one component which is supplied with water during operation of the household appliance. The invention further relates to a household appliance with at least one component which is supplied with water during operation of the household appliance.

The build-up of limescale and the calcification of fluid paths are a repeated problem in household appliance with at least one component which is supplied with water during operation of the household appliance. Typical examples include coffee machines, which due to the use of high-temperature water in their operation, can accumulate significant amounts of lime on surfaces of components which are in contact with water during operation of the household appliance after some brewing cycles. However, there are also other household appliances with components such as a water tank, a pipe, or a pump, which are in contact with water during operation of the household appliance, wherein in these household appliances the water is not heated. Even in such household appliances, in which water is not actively heated during operation, the formation of limescale can occur due to an evaporation of water. These lime deposits often form on various parts of the machine. This phenomenon has several disadvantages for the user experience. Lime deposits and calcification can for example impair the taste of the coffee, leading to a less enjoyable beverage for the user. Accumulated lime can also reduce the efficiency of the household appliance, leading to longer process times, lower water temperatures, an insufficient amount of water, and increased energy consumption. In extreme cases, lime buildup can cause blockages in the system, potentially resulting in costly repairs or even complete failure of the household appliance. Aesthetically, lime deposits can make the household appliance appear dirty and unappealing, which may deter users from using it.

To mitigate these issues, it is recommended that such household appliances be regularly descaled to remove any lime buildup. However, the frequency of the cleaning process is usually made based on estimations that are often not realistic. For example, the local water hardness level may sometimes be entered manually by the user. Based on the water hardness level entered by the user, the household appliance can then recommend performing a descaling process from time to time. Such a recommendation then depends on the water hardness entered by the user and on the utilization of the household appliance. However, these estimates sometimes mean that descaling is carried out too late and cannot remove the entire lime that has build up over time on the surfaces of the respective fluid paths of the household appliance. This often leads to a situation in which the household appliance is malfunctioning and has a shortened lifetime.

The technical task is therefore to ensure the functionality and efficiency of a household appliance that has at least one component that comes into contact with water during operation and on which limescale deposits can form.

According to the invention, this task is solved by a method according to claim 1 and by a household appliance having the features of claim 13. Advantageous developments of the invention are specified in the respective dependent claims, wherein advantageous developments of the method are to be regarded as advantageous developments of the household appliance and vice versa.

A first aspect of the invention relates to a method for descaling a detection device of a household appliance, which comprises at least one component, which is supplied with water during operation of the household appliance, wherein the detection device comprises working electrodes which are arranged in a fluid path of the water and are configured to detect a presence of limescale on at least one surface of the at least one component, wherein at least the steps a) bringing the working electrodes into contact with a descaling medium, b) applying a voltage to the working electrodes for a fixed time period, c) optionally waiting for a predetermined rest period, and d) applying a range of potentials to the working electrodes are performed. In other words, the invention provides a method for removing limescale from the working electrodes of a detection device of a household appliance. The working electrodes are located in the fluid path of the water and the detection device is designed to detect limescale on the surfaces of one or more components of the household appliance using said working electrodes. The method involves bringing the detection device's working electrodes into contact with a descaling solution. A fixed voltage is then applied to these working electrodes for a set duration, optionally followed by a rest period. Finally, the working electrodes are subjected to a range of potentials. This process effectively removes limescale buildup at least on the working electrodes of the detection device, ensuring their proper functioning. In some embodiments, the order of steps b) and d) can be reversed. The method according to the invention offers several advantages. It is highly effective at removing limescale from the working electrodes which then allows for the accurate management of descaling needs without disrupting the appliance's regular operation. Due to the restoration of the basic state of the working electrodes, it also ensures the precise measurement of limescale accumulation within the household appliacne, allowing users to perform descaling only when really necessary, thereby saving money and time. Also, by incorporating reversible working electrodes, the method promotes environmental sustainability since the working electrodes can in principle be used throughout the lifetime of the appliance. The method can be carried out in situ without the need for disassembly or removal of the detection device or the working electrodes from the household appliance. The advantages of this method further include less user concern for a proper functioning of the household appliance, reduced risk of breakdowns and repair costs, longer appliance lifetime, lower water, detergent, and energy costs, increased environmental sustainability due to reduced overdosage of detergents, and the use of optimal working electrode materials for a robust and durable detection device. Additional advantages of having an actual reversible lime detection device include the ability to predict and activate descaling procedures before the user is warned or alerted, optimal use of descaling products to save money and time for the customer, and reduction of user interaction for descaling procedures.

In an advantageous development the descaling medium is an aqueous solution with an acidic pH value and/or comprises one or more of citric acid, maleic acid, amidosulfonic acid, acetic acid, hydrochloric acid, lactic acid, phosphoric acid, sodium tripolyphosphate, tartaric acid, sodium carbonate, and sodium hydrogencarbonate. The advantage of using this descaling medium is that hydrogen bubbles can safely be generated at the working electrodes during steps b) and/or d) and break down lime deposits on the respective working electrode without damaging the electrode material, the detection device, or other parts of the houshold machine. Preferably, the descaling medium contains a mixture of citric acid, maleic acid, amidosulfonic acidic, and sodium hydrogencarbonate. The active ingredients of the descaling medium can be present as a predefined mixture in powder or tablet form and dissolved in a predetermined amount of water, for example in 0.5 L, to produce the descaling medium that is then filled into the fluid patch of the household appliance.

In a further advantageous development of the invention it is provided that in step b) a voltage between -0.9 V and -1.8 V, in particular about -1.6 V, is applied and/or that the fixed time period is selected between 2 min and 6 min, in particular between 3 min and 5 min, preferably about 4 min. This improves the descaling process by controlling the ficed voltage and/or duration of step b) in the descaling method. If the voltage is set to a fixed value within this voltage range, the generation of hydrogen bubbles that can break down lime deposits without damaging the electrode material can be optimized. The pH and/or the composition of the descaling medium can also be taken into consideration to determine the optimal voltage value. The time period selection allows for efficient cleaning within acceptable timeframes and can also take into account the composition and properties of the descaling medium and the properties of the household appliance. This optimization also helps maintain the integrity and performance of the working electrodes and detection device during the descaling process.

In a further advantageous development of the invention it is provided that in step b) a resulting current is measured as a function of the applied voltage by an evaluation unit of the detection device. This can also be referred to as fixed amperometry and allows for the analysis and evaluation of the relationship between the applied voltage and the observed current by the evaluation unit, providing valuable information about the status of the working electrodes and the calcification status of the household appliance being monitored. Amperometry generally is an electroanalytical technique used to measure the current that flows between the working electrodes while in contact with the descaling medium as a function of time. This current is proportional to the rate of a chemical reaction that occurs at the surface of the working electrodes due to the descaling medium, which can be related to the concentration of lime. The pH, temperature, and composition of the descaling medium can be taken into account. In amperometry, a constant potential is applied to the working electrodes, and the resulting current is measured as a function of time. The potential is chosen such that it drives an electron-transfer reaction involving the analyte of interest at the electrode surface. The resulting current can then be used to quantify the concentration of the analyte, i. e. the limescale. The measurement of the resulting current as a function of the applied voltage can thus be used to characterize the descaling process, where the the descaling medium and the applied voltage lead to the safe generation of hydrogen bubbles without damaging the working electrode material or compromising the performance of the detection device. The measured current information can then be utilized to optimize the descaling process and ensure the efficient removal of lime deposits while preserving the integrity of the working electrode material.

In a further advantageous development of the invention it is provided that in step c) the rest period is selected between about 1 s and about 60 s. While it is generally possible to do without any rest period between steps b) and d), a rest period of up to 1 min allows the hydrogen bubbles to dissipate and the lime particles to settle, preventing them from redepositing on the working electrodes. By selecting an appropriate rest period duration, the cleaning process can be optimized for efficiency and longevity of the detection device.

In a further advantageous development of the invention it is provided that in step d) applying a range of potentials comprises varying a potential difference of the working electrodes at a constant rate with time between a first and a second potential limit for a predetermined number of cycles. By varying the potential difference of the working electrodes at a constant rate with time between a first and a second potential limit for a predetermined number of cycles, it suprisingly allows for a more controlled and systematic detachment of remaining limescale deposits. Further, this process can provide valuable information about the properties of the limescale deposits, such as their composition, structure, and stability, which can then be used to optimize the descaling process to ensure reliable and correct measurements of the household appliance's scaling status on a permanent basis.

In a further advantageous development of the invention it is provided that the first potential limit is about -1.8 V and/or that the second potential limit is about 1 V, and/or that the amount rate is selected between 0.1 V/s and 0.4 V/s, in particular about 0.30 V/s, and/or that the number of cycles is at least 15, in particular 20. In other words it is provided to vary the potential difference of the working electrodes in step d) in a linear up-and-down ramp with the values -1.8 V, -1.7 V, -1.6 V, -1.5 V, -1.4 V, -1.3 V, -1.2 V, -1.1 V, -1.0 V, - 0.9 V, -0.8 V, -0.7 V, -0.6 V, -0.5 V, -0.4 V, -0.3 V, -0.2 V, -0.1 V, 0.0 V, 0.1 V, 0.2 V, 0.3 V, 0.4 V, 0.5 V, 0.6 V, 0.7 V, 0.8 V, 0.9 V, 1.0 V, 0.9 V, 0.8 V, 0.7 V, 0.6 V, 0.5 V, 0.4 V, 0.3 V, 0.2 V, 0.1 V, 0.0 V, -0.1 V, -0.2 V, -0.3 V, -0.4 V, -0.5 V, -0.6 V, -0.7 V, - 0.8 V, -0.9 V, -1.0 V, -1.1 V, -1.2 V, -1.3 V, -1.4 V, -1.5 V, -1.6 V, -1.7V, -1.8 V etc., whereby corresponding intermediate values are to be regarded as also disclosed, for one or more cycles with a fixed amount rate that is selected for example from 0.10 V/s, 0.11 V/s, 0.12 V/s, 0.13 V/s, 0.14 V/s, 0.15 V/s, 0.16 V/s, 0.17 V/s, 0.18 V/s, 0.19 V/s, 0.20 V/s, 0.21 V/s, 0.22 V/s, 0.23 V/s, 0.24 V/s, 0.25 V/s, 0.26 V/s, 0.27 V/s, 0.28 V/s, 0.29 V/s, 0.30 V/s, 0.31 V/s, 0.32 V/s, 0.33 V/s, 0.34 V/s, 0.35 V/s, 0.36 V/s, 0.37 V/s, 0.38 V/s, 0.39 V/s, or 0.4 V/s, wherein between about 0.30 V/s and about 0.35 V/s is prefered. As soon as one of the potential limits is reached, the rate is inverted, for example from +0.35 V/s to -0.35 V/s and vice versa. Preferably the number of cycles is at least 15, 16, 17, 18, 19, 20, or more, with 20 being most prefered. The selection of potential or voltage limits, cycle rates and cylce numbers generally ensures an optimal descaling process while minimizing potential damages or alterations in the household appliance performance.

In a further advantageous development of the invention it is provided that in step d) resulting current values are measured as a function of the applied voltage. This can also be referred to as cyclic voltammetry which is an electroanalytical technique used to measure the current that flows between the working electrodes while in contact with the descaling medium as a function of the applied potential. This current is proportional to the rate of a chemical reaction that occurs at the surface of the working electrodes, which can be related to the concentration of lime. In voltammetry, the potential of the working electrodes is generally varied systematically over a range of values, and the resulting current is measured as a function of potential. The result can be represented as a curve called a voltammogram, which shows the relationship between the applied potential and the resulting current. The shape and position of this curve provides information about the identity and concentration of the lime. The pH, temperature, and composition of the descaling medium can be taken into account.

In a further advantageous development of the invention it is provided that a degree of calcification of the working electrodes is deducted by the evaluation unit based on the measured current values. This allows a particularly precise evaluation and determination of the current degree of calcification. Based on this information, the descaling process can be controlled or regulated in such a way that the working electrodes are reliably restored to their original state in order to deliver precise measurement results The evaluation unit may utilize established correlations, e.g. an characteristic map, between current values and calcification levels, or it may employ machine learning algorithms to discern patterns and trends in the data, thereby enabling it to make accurate determinations regarding the extent of calcification. This allows for proactive maintenance and timely regeneration of the working electrodes, optimizing their performance and lifespan while ensuring the continued accuracy and reliability of the overall system.

In a further advantageous development of the invention it is provided that in a step f) by the evaluation unit actual impedance values of the working electrodes are measured at one or more frequencies and compared with stored base impedance values of a base state of the working electrodes without calcification to deduct the degree of calcification of the working electrodes based on a recognition of a pattern of a plurality of values indicating the impedance of the working electrodes at one or more frequencies. Therefore, the impedance of the working electrodes can be readily determined by the evaluation unit of the detection device. The Impedance can thus be measured using a technique called impedance spectroscopy, which involves applying a small AC voltage signal to the working electrodes and measuring the resulting current flow as a function of frequency. The resulting data can be analyzed to obtain information about the electrical properties of the material, such as its conductivity, permittivity, and dielectric loss. By determining the impedance, a potential presence of limescale on the at least one surface can be monitored. Therefore, the presence of limescale on the at least one surface of the at least one component which is in contact with water during operation of the household appliance can be readily and accurately detected by means of the detection device. Preferably, a set of frequencies at least between 10 Hz and 10 kHz is measured. These measured impedance values are then compared to stored base impedance values that represent a base state of the working electrodes without calcification. The base impedance values can either be measured when commissioning the household appliance for the first time or can be saved as predefined values. By recognizing a pattern in the plurality of values indicating the impedance of the working electrodes at one or more frequencies, the degree of calcification of the working electrodes can be deduced. This comparison and analysis enables the identification of any deviations from the base state, which indicates the presence and is a measure for the extent of calcification on the working electrodes. Consequently, the household appliance is improved with respect to the handling of limescale deposits. As the household appliance comprises the detection device, there is no need for a user of household appliance to enter a water hardness level into the household device in order to assess when a descaling operating should be performed. This facilitates the operation of the household appliance. Further, the deposit of limescale can be detected rapidly by means of the detection device. Consequently, an undesirable accumulation of limescale can be avoided. This improves the performance of the household appliance and extends the lifetime of the household appliance. This is beneficial for a convenient and also efficient use of the household appliance. Still further, the detection device, which relies on impedance measurements, i.e. on the determination of the impedance, is inexpensive and reliable. In addition, the determination of the impedance is a technically mature technology, and the detection device utilizing impedance measurements features a long lifetime. By regularly evaluating and addressing calcification, the lifespan and efficiency of these systems can be improved, resulting in cost savings and improved overall performance.

In a further advantageous development of the invention it is provided that the evaluation unit conducts a principal component analysis for dimensionality reduction and analysis of the actual impedance values to determine the degree of calcification of the working electrodes. Principal component analysis generally is a statistical procedure that uses an orthogonal transformation to convert a set of observations of possibly correlated variables into a set of values of linearly uncorrelated variables called principal components. This transformation is defined in such a way that the first principal component has the largest possible variance, and each succeeding component in turn has the highest variance possible under the constraint that it is orthogonal to the preceding components. The resulting vectors are an uncorrelated orthogonal basis set. PCA is sensitive to the relative scaling of the original variables. In this method, the evaluation unit uses PCA to reduce the dimensionality of the actual impedance values measured from the working electrodes and analyze them to determine the degree of calcification. By reducing the number of random variables under consideration, PCA can help to filter out noise and focus on the most important factors contributing to the calcification of the working electrodes. This information can then be used to optimize the operation of the detection device to prevent and avoid the negative effects of calcification.

Further advantages arise in that at least one of steps a), b), and d) is repeated if the determined degree of calcification of the working electrodes exceeds a predetermined calcification limit value. Where the degree of remaining calcification after one cycle of descaling still exceeds the predetermined limit value, at least one of steps a), b), and d) is repeated to reduce the degree of calcification. This feedback loop ensures that the working electrodes remain within the predetermined calcification limit value and maintain their performance over time. The specific calcification limit value will depend on the application and requirements of the household appliance in which the working electrodes are used.

A second aspect of the invention relates to a household appliance with at least one component which is supplied with water during operation of the household appliance, wherein the household appliance comprises a detection device configured to detect a presence of limescale on at least one surface of the at least one component, wherein the detection device comprises working electrodes which are arranged in a fluid path of the water, and wherein the household appliance comprises a descaling device configured to perform a method according to the first aspect of the invention. This ensures the functionality and efficiency of the household appliance and of the at least one component that comes into contact with water during operation and on which limescale deposits can form. In its simplest embodiment, the detection device is part of or forms the descaling device. Further features and their respective advantages can be gathered from the description of the first aspect of the invention.

In an advantageous development of the invention it is provided that the at least one component is a heating element for heating water, and wherein the working electrodes are arranged in a fluid path for the water downstream of the heating element. This ensures that the working electrodes are positioned in a place in the appliance where the main amount of lime precipitates during operation. The detection device can thus identify limescale deposits particularly reliably and that descaling can be recommended or carried out before the entire houshold appliance is calcified. The heating element can generally be any means to provide hot water, for example an instantaneous water heater, a boiler or the like. The working electrodes are preferably arranged close to the outlet of the heating element.

In a further advantageous development of the invention it is provided that the household appliance is configured as a steam oven or a coffee machine or a washing machine or a dishwasher or a home grow device. In the case of a steam oven, it is designed to evenly cook food using steam while controlling the cooking temperature and time. Preferably, the houshold appliance is a coffee machine, for example a drip coffee maker, a single-serve coffee brewer, a vacuum coffee maker, a Moka pot coffee maker, a thermal coffee maker, or espresso machine. Coffee machines are generally engineered to brew coffee by guiding or forcing hot water and/or steam through ground coffee beans. As for a washing machine, it is built to clean clothes and other textiles by agitating them in water with the addition of detergent and then spinning them to remove excess water. A dishwasher, on the other hand, is designed to clean dishes and cookware by spraying them with water and detergent and then rinsing and drying them. Lastly, a home grow device is configured to facilitate the growth of plants indoors, allowing users to cultivate herbs, vegetables, or other plants in their own homes. In addition, the household appliance may be connected to a wired or wireless network, such as a home automation system, to exchange data for automated operation or for allowing users to monitor and/or control it remotely. This feature provides added convenience and flexibility, enabling users to manage their household appliances automatically and/or from anywhere using a computer, smartphone, or other mobile device. The household appliance may comprise a storage compartment for the descaling medium so that a descaling process can be initiated automatically, i. e. based on lime deposition measurements by the detection device, or remotely based on a user input without requiring the user to be directly at the household appliance.

The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures or explained, but arise from and can be generated by separated feature combinations from the explained implementations. Therefore also embodiments and feature combinations shall be considered as disclosed, which do not have all the features of an originally formulated independent claim. Moreover, implementations and feature combinations are to be considered as disclosed, in particular by the implementations set out above, which extend beyond or deviate from the feature combinations set out in the relations of the claims.

Further advantages, features and details of the invention are apparent from the claims, the following description of preferred embodiments as well as based on the drawings in which features having analogous functions are designated with the same reference signs. Therein show:
- Fig. 1: very schematically a household appliance configured as a coffee machine comprising a detection device for detecting the presence of limescale;
- Fig. 2: a possible configuration of two working electrodes of the detection device;
- Fig. 3: a schematic sectional view of the working electrodes with electric field lines;
- Fig. 4: a graph of the voltage curve over time during cyclic voltammetry;
- Fig. 5: a Bode diagram showing impedance values of the working electrodes varying across several repetitions with patterns of impedance spectroscopy measurements on samples containing limescale compared to samples without limescale; and
- Fig. 6: a graph showing a PCA evaluation of the impedance measurements.

Indications such as "upper", "lower", "top", "front", "bottom", "floor", "horizontal", "vertical", "depth direction", "width direction", "height direction" and the like refer to the positions and orientations of the household appliance in its intended use position with respect to an observer located in front of the household appliance and regarding towards the household appliance.

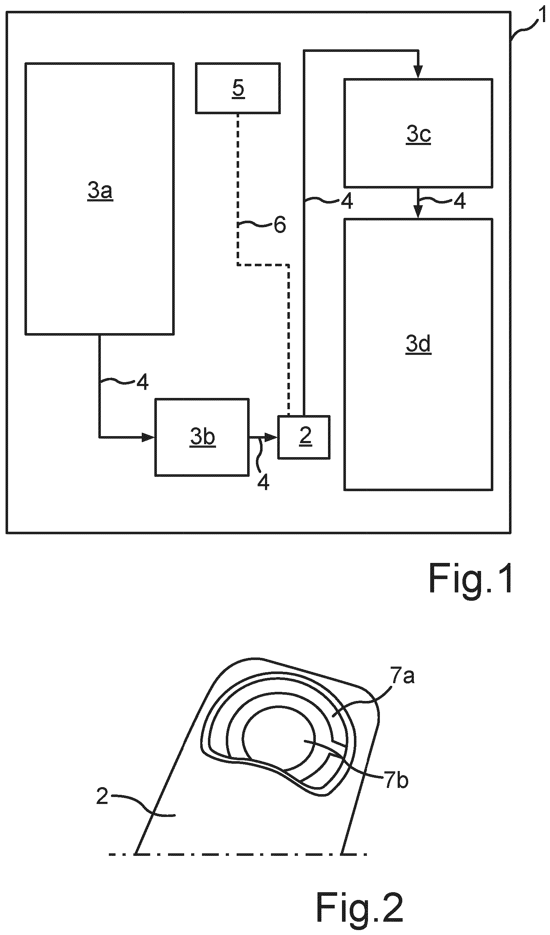

Fig. 1 shows very schematically a household appliance 1 configured as a coffee machine comprising a detection device 2 for detecting the presence of limescale. The household appliance 1 comprises a component 3a which is designed as a water tank, a component 3b which is designed as a heating element, in particular as an instantaneous water heater, a component 3c which is designed as a coffee filter device for brewing coffee powder, and a component 3d which is designed as a coffee (thermos) flask. All components 3a-3d are supplied with water during operation of the household appliance 1 and are connected to each other by corresponding fluid paths 4, whereby the direction of flow of the water is indicated by arrows. The detection device 2 is arranged downstream of an outlet of the heating element 3b, this means in an area where most of the limescale precipitates during operation, as it has a low solubility in heated water. The detection device 2 further comprises an evaluation unit 5 which can be spatially separated or arranged in a common housing (not shown). The evaluation unit 5 can also be part of a general control device of the appliance 1 and be linked to the detection device 2 for data exchange for example by a wire or wireless connection 6. The detection device 2 and the evaluation unit 5 can form or be part of a descaling device which in some embodiments can additionally comprise a tank for a descaling medium.

Fig. 2 shows a possible configuration of two working electrodes 7a, 7b of the detection device 2. AC voltage can be applied to the working electrodes 7a, 7b as will be described in more detail later. The working electrodes 7a, 7b are connected to the detection device 2 and send to it impedance measurements once the AC voltage has been applied. There are generally different options for realizing the working electrodes 7a, 7b such as different materials, sizes and geometries. In the presently shown embodiment, platinum circular electrodes 7a, 7b are used. Circular platinum working electrodes 7a, 7b (also known as rotary platinum electrodes or RDEs) have several advantages over other types of electrodes, particularly in terms of measurement accuracy and lifetime. Circular platinum working electrodes 7a, 7b thus offer a combination of stability, accuracy, power handling and lifetime, making them a good choice for electrochemical measurement of lime.

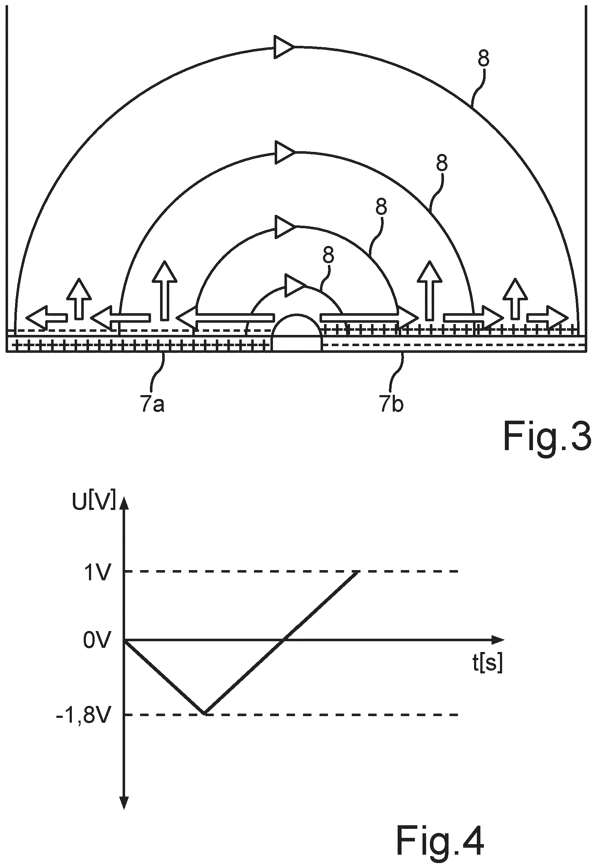

Fig. 3 shows a schematic sectional view of the working electrodes 7a, 7b with electric field lines 8. Substances deposited on the surfaces of the working electrodes 7a, 7b, such as lime deposits, influence the electric field lines 8, thus enabling detection of the deposits.

For descaling the working electrodes 7a, 7b of the detection device 2, generally at least the following steps are performed:
a) bringing the working electrodes 7a, 7b into contact with a descaling medium;
b) applying a voltage to the working electrodes 7a, 7b for a fixed time period;
c) optionally waiting for a predetermined rest period; and
d) applying a range of potentials to the working electrodes 7a, 7b.

The descaling medium should advantageously have an acidic pH to run the descaling process. For this specific use case the descaling medium is prepared by dissolving a descaling tablet (17 g) which comprises the following substances with approximately the same weight ratios:
- Citric acid (pref. anhydrous)
- Maleic acid
- Sulfamic acidic (amidosulfonic acid)
- Sodium hydrogencarbonate (pref. anhydrous).

One tablet is dissolved in about 0.5 L water with mechanical stirring. The final solution is used as the descaling medium for the descaling process of the working electrodes 7a, 7b.

This invention significantly improves the cleaning of coffee machines and other household appliances 1 by achieving complete cleanliness, comparable to initial use impedance values, eliminating even lime nucleation cores within electrode material pores while maintaining functionality and performance of the working electrodes 7a, 7b and thus of the detection device 2. The chosen descaling medium also simultaneously cleans the fluid path of the household appliance 1, combining both cleanings in one process and returning it to its initial state for continued use.

According to a preferred example, the descaling method comprises the following steps:
1. Bringing the working electrodes 7a, 7b in contact with the descaling medium; and
2. Sequentially applying two electrochemical techniques:
   - performing fixed amperometry for 3-5 minutes, preferably 4 minutes, at a voltage that is selected between -0.9 V and -1.8 V voltage, preferably -1.6 V;
   - optionally performing a rest period of preferably no more than one minute;
   - performing cyclic voltammetry with a linear ramp form between two potential limits 1 V and -1.8 V, with an amount rate of preferably up to 0.35 V/s, for example 0.30 V/s, and preferably at least 15-20 cycles (regulating voltage to -1.8 V, inverting the rate, regulating the voltage to +1 V, inverting the rate etc.).

Fig. 4 shows a graph of an example of the voltage curve U [V] over time t (seconds) during the cyclic voltammetry step. It can be seen that the rate is inverted as soon as one of the potential limits is reached. One cycle goes from one of the potential limits, in this case the lower limit -1.8 V, to the second limit (i. e. +1.0 V) and back to the first potential limit (i.e. -1.8 V). In other embodiments, the order can be reversed.

This method generates hydrogen bubbles at the working electrodes 7a, 7b that clean lime deposits on the respective working electrode 7a, 7b without harming the electrode material or sensor performance of the detection device 2. Proper characterization of the medium-voltage relationship avoids electrode material damage and sensor compromise. This descaling medium should remain in contact with the working electrodes 7a, 7b during the improved cleaning process.

To evaluate the cleaning method according to the invention, the following test has been carried out:
1. Initialization: The working electrodes 7a, 7b underwent the above-named descaling method to establish baseline impedance values.
2. First Lime Deposition: 50 coffee cups were brewed using hard water (40°dH) to induce significant lime buildup on the working electrodes 7a, 7b. Impedance is measured after this initial deposition.
3. Second Lime Deposition: An additional 50 coffee cups were brewed, increasing the total to 100 cups and further enforcing lime accumulation. Impedance is measured again.
4. Cleaning & Repeat: The working electrodes 7a, 7b underwent the descaling method again. Steps 2 and 3 are then repeated to assess the effectiveness of the cleaning process.

The result of the descaling method according to the invention was then quantified based on impedance spectroscopy, providing a clear indication of its effectiveness in removing lime deposits. Impedance spectroscopy generally is a technique used to measure the frequency-dependent response of a material or system to an applied alternating current (AC) voltage. It is a powerful tool for characterizing the electrical properties of materials and devices over a wide range of frequencies.

In impedance spectroscopy, a small AC voltage is applied to the working electrodes 7a, 7b, and the resulting current is measured as a function of frequency. The ratio of the voltage to the current is called the impedance (Z), which can be expressed as a complex number with real and imaginary components. The real component, known as the resistance (R), represents the energy dissipated in the material or system, while the imaginary component, known as the reactance (X), represents the energy stored in the system.

The frequency-dependent behavior of the impedance can be visualized using a Bode plot, which is a graphical representation of the magnitude and phase shift of the impedance as a function of frequency. A Bode plot consists of two curves: one showing the magnitude of the impedance on a logarithmic scale, and the other showing the phase shift of the impedance in degrees.

The magnitude curve is often referred to as the "Bode magnitude plot," while the phase shift curve is called the "Bode phase plot." Together, these plots provide valuable information about the electrical properties of the material or system being studied.

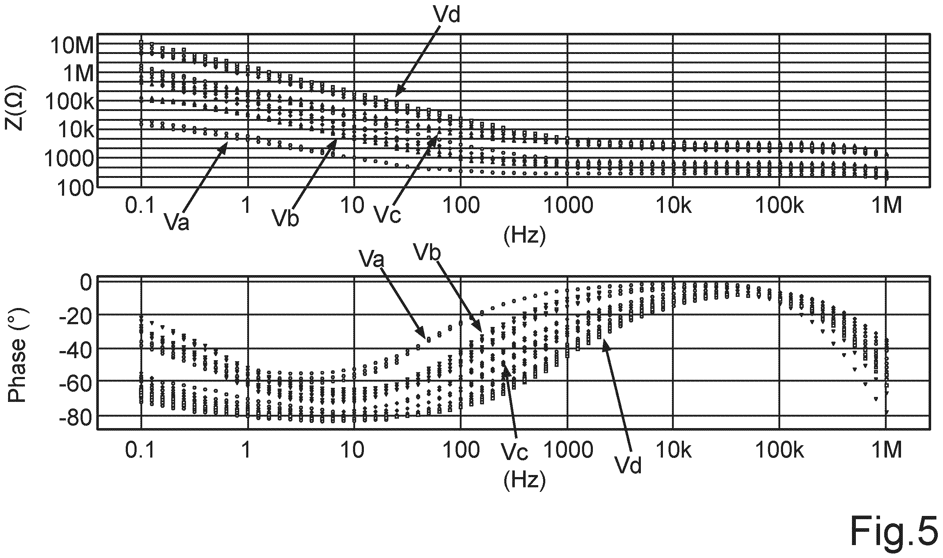

Fig. 5 shows such a Bode diagram with impedance values of the working electrodes 7a, 7b varying across several cycles with patterns of impedance spectroscopy measurements on samples containing limescale after 50 and 100 (i. e. 50+50) cups of coffee compared to samples without limescale after the descaling method. Initial samples after the descaling method but without any brewed cup of coffee are indicated with arrows Va. Samples after the descaling method are indicated with arrows Vb. Samples after 50 cups of coffee are indicated with arrows Vc, while samples after additional 50 cups (i. e. after 100 cups combined) are indicated with arrows Vd.

It can be seen that in particular for frequencies between about 10 Hz and about 10 kHz there is clear shift from the cleaned working electrodes 7a, 7b and the working electrodes 7a, 7b with lime deposited. Also, there is a separation between the initial 50 cups and the additional 50 (i. e. 100) cups. Because lime deposition is not exactly linear with the number of brewed cups, there is partial overlap of the measured values.

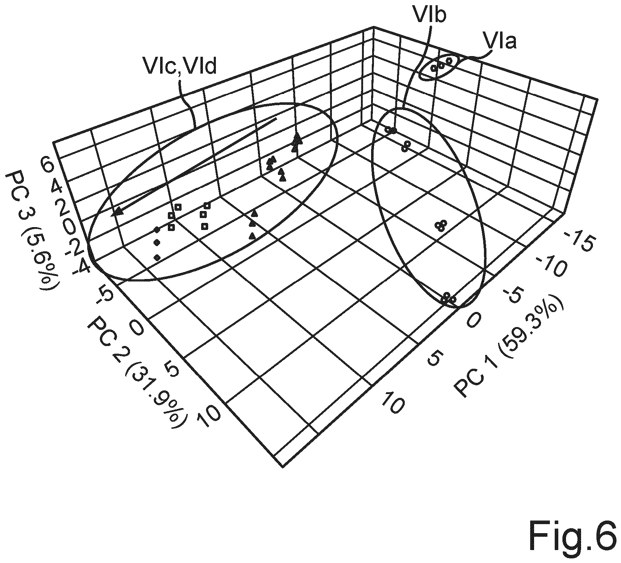

For analysis of the current limescale status, principal component analysis (PCA) can be performed e. g. by the detection device 2 to determine how well-separated the measurements of clean samples are from those containing lime deposits. Fig. 6 shows a graph with a PCA evaluation of the impedance measurements of Fig. 5. Group Vla contains measurements taken immediately after the descaling method according to the invention was applied, but before any coffee brewing. Group VIb shows samples that were both brewed (50 or 100 cups) and then descaled using the descaling method according to the invention. Groups VIc and Vld represent samples that underwent 50 or 100 cups of brewing without subsequent descaling. The distinct grouping of the individual samples can therefore be used to analyze the degree of calcification.

The resulting advantages of a properly descaled houshold appliance 1 are manifold. The method and houshold appliance 1 according to the invention lead to reduced user concern for proper functioning, as the houshold appliance 1 is configured for optimal performance, ensuring no change in coffee taste or any other appliance-related issue. Through precise lime deposit determination and timely preventative measures, the robust and durable detection device 2 extends the lifespan of the houshold appliance 1. Moreover, lower costs for water, detergents, and energy can be realized. The household appliance 1 promotes environmental friendliness by eliminating overdosage of detergents and reduces material costs through recycling of the working electrodes 7a, 7b. Notably, the properly descaled working electrodes 7a, 7b operate without requiring any additional reagents or the like.

### List of Reference Signs

- 1: household appliance
- 2: detection device
- 3a: component
- 3b: component
- 3c: component
- 3d: component
- 4: fluid path
- 5: evaluation unit
- 6: connection
- 7a: working electrode
- 7a: working electrode
- 8: field lines
- Va-Vd: arrows
- Vla-Vld: PCA group

## Claims

1. A method for descaling a detection device (2) of a household appliance (1), which comprises at least one component (3a, 3b, 3c), which is supplied with water during operation of the household appliance (1), wherein the detection device (2) comprises working electrodes (7a, 7b) which are arranged in a fluid path (4) of the water and are configured to detect a presence of limescale on at least one surface of the at least one component (3a, 3b, 3c), wherein at least the following steps are performed:
a) bringing the working electrodes (7a, 7b) into contact with a descaling medium;
b) applying a voltage to the working electrodes (7a, 7b) for a fixed time period;
c) optionally waiting for a predetermined rest period; and
d) applying a range of potentials to the working electrodes (7a, 7b).

2. The method of claim 1, wherein the descaling medium is an aqueous solution with an acidic pH value and/or comprises one or more of citric acid, maleic acid, amidosulfonic acid, acetic acid, hydrochloric acid, lactic acid, phosphoric acid, sodium tripolyphosphate, tartaric acid, sodium carbonate, and sodium hydrogencarbonate.

3. The method of claim 1 or 2, wherein in step b) a voltage between -0.9 V and -1.8 V, in particular about -1.6 V, is applied and/or wherein the fixed time period is selected between 2 min and 6 min, in particular between 3 min and 5 min, preferably about 4 min.

4. The method of any one of claims 1 to 3, wherein in step b) a resulting current is measured as a function of the applied voltage by an evaluation unit (5) of the detection device (2).

5. The method of any one of claims 1 to 4, wherein in step c) the rest period is selected between 1 s and 60 s.

6. The method of any one of claims 1 to 5, wherein in step d) applying a range of potentials comprises varying a potential difference of the working electrodes (7a, 7b) at a constant rate with time between a first and a second potential limit for a predetermined number of cycles.

7. The method of claim 6, wherein the first potential limit is about -1.8 V and/or wherein the second potential limit is about 1 V, and/or wherein the amount rate is selected between 0.1 V/s and 0.4 V/s, in particular between about 0.30 V/s and about 0.35 V/s, and/or wherein the number of cycles is at least 15, in particular 20.

8. The method of any one of claims 1 to 7, wherein in step d) resulting current values are measured as a function of the applied voltage.

9. The method of claim 8, wherein a degree of calcification of the working electrodes (7a, 7b) is deducted by the evaluation unit (5) based on the measured current values.

10. The method of any one of claims 1 to 9, wherein in a step f) by the evaluation unit (5) actual impedance values of the working electrodes (7a, 7b) are measured at one or more frequencies and compared with stored base impedance values of a base state of the working electrodes (7a, 7b) without calcification to deduct the degree of calcification of the working electrodes based on a recognition of a pattern of a plurality of values indicating the impedance of the working electrodes at one or more frequencies.

11. The method of claim 10, wherein the evaluation unit (5) conducts a principal component analysis for dimensionality reduction and analysis of the actual impedance values to determine the degree of calcification of the working electrodes (7a, 7b).

12. The method of any on of claims 9 to 11, wherein at least one of steps a), b), and d) is repeated if the determined degree of calcification of the working electrodes (7a, 7b) exceeds a predetermined calcification limit value.

13. A household appliance (1) with at least one component (3a, 3b, 3c) which is supplied with water during operation of the household appliance (1), wherein the household appliance (1) comprises a detection device (2) configured to detect a presence of limescale on at least one surface of the at least one component (3a, 3b, 3c), wherein the detection device (2) comprises working electrodes (7a, 7b) which are arranged in a fluid path (4) of the water, and wherein the household appliance (1) comprises a descaling device configured to perform a method according to any one of claims 1 to 12.

14. The household appliance (1) of claim 13, wherein the at least one component (3a, 3b, 3c) is a heating element (3b) for heating water, and wherein the working electrodes (7a, 7b) are arranged in a fluid path (4) for the water downstream of the heating element (3b).

15. The household appliance (1) of claim 13 or 14, which is configured as a steam oven or a coffee machine or a washing machine or a dishwasher or a home grow device.
